Europäisches Patentamt

(19) European Patent Office

Office européen des brevets

(11) Numéro de publication: **0 387 473**
**A1**

(12) # DEMANDE DE BREVET EUROPEEN

(21) Numéro de dépôt: **89830137.9**

(22) Date de dépôt: **29.03.89**

(51) Int. Cl.5: **F16L 55/02**

(30) Priorité: **14.03.89 IT 695289 U**

(43) Date de publication de la demande:
**19.09.90 Bulletin 90/38**

(84) Etats contractants désignés:
**AT BE CH DE ES FR GB GR IT LI LU NL SE**

(71) Demandeur: **FISITEC FILTER-TECHNIK AG**
**Locherstrasse 23**
**CH-7000 Chur(CH)**

(72) Inventeur: **Dorizi, Emilio**
**Mühlebachstrasse 2**
**CH-8008 Zurich(CH)**

(74) Mandataire: **Manzoni, Alessandro**
**MANZONI & MANZONI - UFFICIO**
**INTERNAZIONALE BREVETTI P.le Arnaldo n.**
**2**
**I-25121 Brescia(IT)**

(54) **Filtre contre le bruit pour installations hydrosanitaire.**

(57) L'invention concerne un filtre contre le bruit à associer à des raccords excentriques (12), tuyauteries, ou dispositifs destinés au passage d'un fluide pour en réduire le bruit et les vibrations, constitué par un élément (11) en matériel élastomère pourvu d'une pluralité de trous ou canaux longitudinaux (13) pour le fractionnement de la veine de fluide qui y passe en de nombreux filets de fluide, et de moyens de tenue externes pour son montage en oeuvre à tenue péripherique.

Fig.1

## FILTRE CONTRE LE BRUIT POUR INSTALLATIONS HYDROSANITAIRE

L'invention concerne le domaine des raccords excentriques, tuyauteries ou dispositifs destinés au passage d'un fluide liquide ou gazeux, comme soupapes en général, robinets pour baignoires, robinetterie pour installations sanitaires et similaires. Plus particulièrement l'invention concerne un filtre contre le bruit ayant la fonction de silencieux applicable aux organes ci-dessus mentionnés afin de limiter le bruit produit par le flux de fluide qui y passe.

C'est donc le but principal de l'invention que de fournir un élément avec fonction de silencieux capable de garantir, quand mis en place, un niveau de bruit et de vibrations suffisamment bas dans le cadre d'une construction simple et économique et qui donne des garanties de bon fonctionnement et sûre efficacité, chose que l'on ne peut pas obtenir par les moyens adoptés jusqu'à présent.

Ce but est atteint de façon satisfaisante grâce essentiellement à la pose d'une pièce élastique à l'interieur du raccord excentrique ou dans la tuyauterie ou dispositif concerné, afin de diviser la veine de fluide qui y passe en une pluralité de filets de flux parallèles ou concentriques.

Une des caractéristiques plus importantes que doit avoir une installation sanitaire, est celle d'être de fonctionnement silencieux. Les bruits et vibrations de ces installations constituent un grave défaut et ce sont des phénomènes qui ont une importance capitale spécialement dans les constructions modernes en ciment armé ou avec structure en fer, étant donné que le bruit de ces materiaux est trés élevé (2200 m/sec pour le ciment et 5100 m/sec pour le fer).

Les principales causes des bruits qui peuvent contribuer individuellement ou simultanément sont:

a) l'excessive vitesse de l'eau;

b) coups de bélier;

c) débits violents;

d) mouvements des tuyauteries dûs à des dilatations thermiques.

L'invention a pour but essentiel de réduire les bruits causés par l'excessive rapidité de l'eau: en effet pour des motifs liés aux sections internes n'ayant pas un dessin hydro-dinamique, la vitesse que prend l'eau en les traversant rejoint des valeurs même de 50 m/sec et donc supérieures à la vitesse critique.

Atteinte, ou pire encore dépassée, la vitesse critique, le flux d'eau prend un cours tumultueux, à l'origine justement des bruits que l'on reproche. Pour confirmenr tout ceci existe le fait, facilement contrôlable que, dans les installations avec répartition de l'eau à chute, ce phénomène a difficilement lieu.

Afin que le débit d'eau ne cré pas de bruits, la vitesse de débit doit répondre aux trois formules suivantes:

1) $V = Vc$

2) $V = Q/A$

$$3)\ V = \sqrt{\frac{H}{K \cdot A}}$$

dans lequelles:

A est la section minimum interne du robinet; V est la vitesse de l'eau dans cette section; Vc est la vitesse critique de l'eau; H est la perte de charge; Q est la portée; K est le coefficient qui dépend de la forme de la section critique du robinet.

En fait les valeurs de H et Q sont connues alors que les valeurs de A, V et K dépendent de la construction spéciale du robinet.

Si la pression en amont du robinet est très forte les équations 2 et 3 peuvent être satisfaites, mais pas l'equation 1.

Le moyen pratique pour obtenir que l'équation 1 soit également satisfaite est le suivant: diviser la veine fluide en de nombreaux filets parallèles ou concentriques dont, par chacun, la vitesse soit inférieure à celle critique, chose que constitue en effet le but principal de l'invention.

Dans ce but l'invention propose un silencieux à insérer dans des raccords excentriques, tuyauteries ou dispositifs destinés au passage d'un fluide, lequel est constitué par un élément en matériel élastomère fourni d'une pluralité de trous ou canaux longitudinaux pour le fractionnement de la veine de fluide qui y passe en de nombreux filets de flux; et de moyens de tenue externes pour son montage à tenue périphérique.

Afin d'obtenir une bonne éfficacité, il est important que le silencieux soit en matériel elastique l'élément qui le constitue est donc réalisé avec un caoutchouc très souple, c'est-à-dire d'une dureté de 40 à 55 Shore environ.

Les trous ou canaux longitudinaux d'un tel élément peuvent être parallèles entre eux ou concentriques.

En conformité, l'élément silencieux peut avoir une pluralité de trous disposés sur différents cercles concentriques et parallèlement à un trou central fait en axe à l'élément même.

En alternative, l'élément silencieux peut avoir une pluralité de trous disposés sur différents cercles concentriques autour d'une zone centrale pleine de l'élément même.

Dans ces deux formes de réalisation les trous pourront tous avoir le même diamètre, ou alors les trous sur un même cercle pourront avoir un diamètre différent des trous d'un autre cercle.

L'élément silencieux peut même être muni de canaux en éventail disposés autour d'un trou axial et délimités par de petites ailes radiales prévues entre une partie cylindrique centrale qui délimite le trou axial et une partie cylindrique périphérique.

Suivant une autre forme d'exécution, l'élément peut avoir des canaux à section de cercle obtenus sur des circonférences concentriques à un trous axial.

Pour chaque réalisation, l'élément silencieux a extérieurement, pour la tenue périphérique, des colliers annulaires en saillie, adjacents aux extrémités de l'élément même et ayant la fonction de joints, les colliers pouvant éventuellement être reliés par des côtes qui s'étendent selon les génératrices de la surface externe de l'élément.

Enfin, au lieu d'un collier à chaque extrémités de l'élément on pourra prevoir, toujours dans le même but, un couple de colliers annulaires parallèles qui délimitent entre eux un chambre à air annulaire lorsque l'élément est mis en place.

De nombreux détails de l'invention seront cependant plus évidents à la suite de la description faite, faisant référence à certains exemples de réalisation pratique du silencieux, illustrés dans les dessins ci-joints.

Dans les dessins mentionnés:

la Fig.1 représente en vue perspective une première forme de réalisation du silencieux;

la Fig.2 représente une vue frontale du silencieux de la fig.1;

la Fig.3 représente en vue perspective une deuxième forme de réalisation du silencieux;

la Fig.4 représente une vue frontale du silencieux de la fig.3;

la Fig.5 représente une section transversale d'une autre forme de réalisation du silencieux;

la Fig.6 représente une section axial du silencieux de la fig.5;

la Fig.7 représente une section transversale d'une autre forme de réalisation du silencieux;

la Fig.8 représente une section axiale du silencieux de la fig.7; et

la Fig.9 représente un exemple d'application du silencieux mis en place.

Le filtre contre le bruit en examen est donc constitué d'un élément 11 en matériel élastomère, comme un caoutchouc très souple c'est-à-dire avec une dureté de 40-55 Shore environ. Tel élément 11 peut, par exemple, être inséré, à tenue périphérique, dans un raccord excentrique 12 -voir fig.9- qui sert à la jonction entre une installation hydraulique et l'ensemble des robinets de la baignoire, robinet, valve ou similaire.

L'élément peut également être utilisé de n'importe quelle autre façon en association à tuyauterie, robinets ou dispositifs parcourus par une veine de fluide et est destiné lui-même à être traversé par le fluide pour atténuer les bruits et les vibrations que celui-ci peut causer.

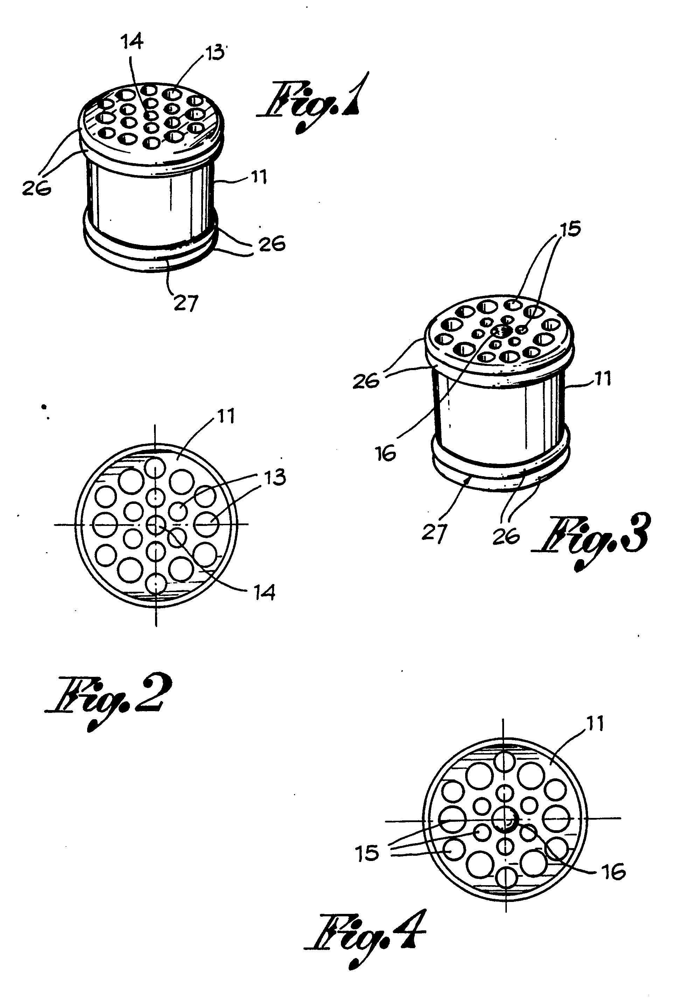

Dans la forme de réalisation représentée dans les fig.1 et 2, l'élément silencieux 11 est pourvu d'une pluralité de trous longitudinaux 13 disposés sur des cercles concentriques et parallèlement à un trou central 14 placé en axe à l'élément même. Les trous 13,14 de l'élément peuvent avoir des diamètres égaux ou différents.

Dans la forme de réalisation représentée dans les fig.3 et 4, l'élément silencieux 11 est pourvu encore d'une pluralité de trous longitudinaux 15 disposés sur des cercles concentriques, mais autour d'une zone centrale pleine 16 de l'élément même.Dans ce cas également les trous 15 pourront être tous les mêmes ou alors de diamètre différent.

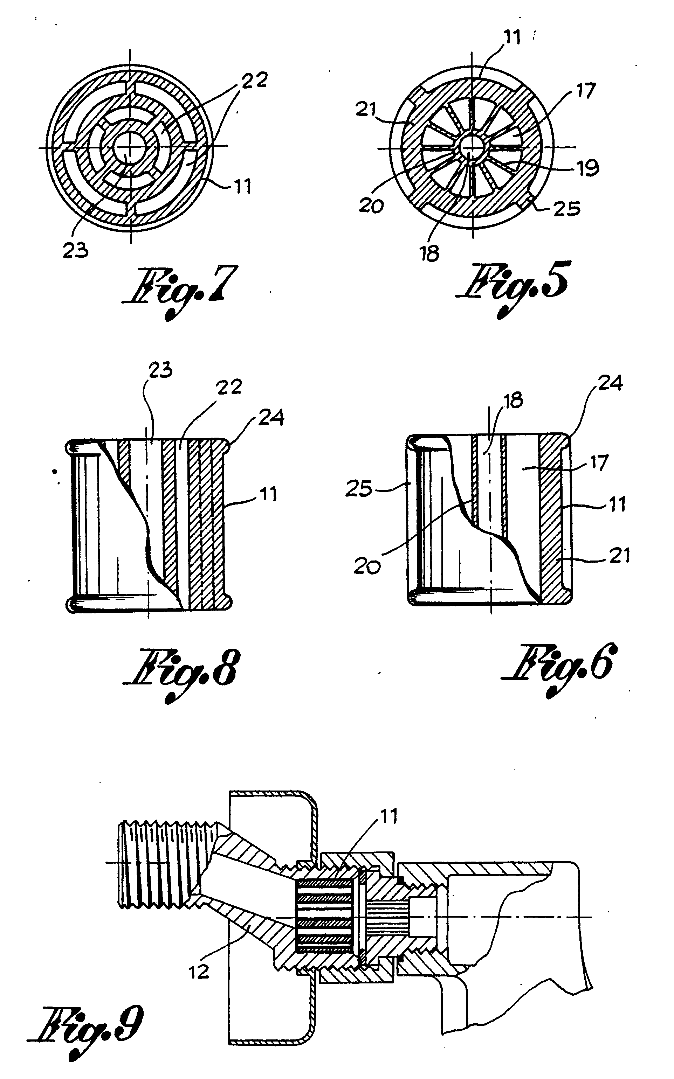

Dans les figures 5 et 6 est illustré un élément silencieux 11 pourvu de canaux en éventail 17 disposés autour d'un trou axial central 18 et définis par de petites ailes radiales 19 obtenues entre une partie cylindrique centrale 20 qui délimite le trou 18 et une partie cylindrique périphérique 21.

Dans les figures 7 et 8 est enfin illustré un élément silencieux 11 pourvu de canaux à secteur de cercle 22 placés sur circonférences concentriques à un trou central axial 23.

Pour chaque forme d'éxécution, les trous ou canaux de l'élément ont pour but final celui de fractionner la veine de fluide sur le parcours duquel se trouve le silencieux à entrer en fonction de façon à reduire la vitesse et le bruit du fluide. Pour sa mise en place à tenue périphérique l'élément silencieux 11 est muni extérieurement de colliers annulaires en saillie 24 placés au moins de façon adjacente aux extrémités de l'élément même, ayant la fonction de joints et éventuellement reliés entre eux par des côtes longitudinales 25 comme représenté par exemple dans les fig.5 et 6 du dessin.

Pour une meilleure installation au lieu de chaque collier annulaire 24, l'élément silencieux pourra présenter deux colliers parallèles 26 -voir fig.1,3- qui délimitent entre eux une chambre à air 27 lorque l'élément est mis en place.


## Revendications

1^) Filtre contre le bruit à associer à des raccords excentriques, tuyauteries, ou dispositifs destinés au passage d'un fluide pour en réduire le bruit et les vibrations, caractérisé en ce qu'il est constitué par un élément (11) en matériel élastomère pourvu d'une pluralité de trous ou canaux longitudinaux (13,14; 15;17,18; 22,23) pour le fractionnement de la veine de fluide qui y passe en de nombreux filets de fluide, et de moyens de tenue externes (24,26) pour son montage en oeuvre à tenue peripherique.

2^) Filtre contre le bruit selon la revendication 1^) dans lequel le dit élément (11) est réalisé dans un caoutchouc très souple c'est-à-dire ayant une dureté de 40 à 50 Shore environ.

3^) Filtre contre le bruit selon la revendication 1^) et 2^), dans lequel les trous ou canaux longitudinaux du dit élément (11) sont parallèles entre eux ou concentriques.

4^) Filtre contre le bruit selon la revendication 3^), dans lequel le dit élément (11) est pourvu d'une pluralité de trous (13) disposés sur differents cercles concentriques et parallèlement à un trou central (14) placé en axe à l'élément même .

5^) Filtre contre le bruit selon la revendication 3^), dans lequel le dit élément est pourvu d'une pluralité de trous (15) disposés sur différents cercles concentriques autour d'une zone centrale pleine (16) de l'élément même.

6^) Filtre contre le bruit selon une des revendications 5^) et 6^) dans lequel les trous (13,15) sont tous d'une même diamètre ou dans lequel les trous (13,15) sur un cercle ont un diamètre différent des trous d'un autre cercle.

7^) Filtre contre le bruit selon les revendications 1^) et 2^), dans lequel le dit élément est pourvu de canaux en éventail (17) disposés autour d'un trou axial (18) et délimités par de petites ailes radiales (19) prévues entre une partie cylindrique centrale (20) qui délimite le trou axial (18) et une partie cylindrique périphérique (21).

8^) Filtre contre le bruit selon les revendications 1^) et 2^), dans lequel le dit élément est pourvu de canaux (22) à sections de cercle placés sur circonférences concentriques à un trou axial (23).

9^) Filtre contre le bruit selon une des revendications précédentes quelconque, dans lequel le dit élément est pourvu extérieurment, pour la tenue périphérique une fois placé, de colliers annulaires en saillie (24) adjacents au moins aux extrémités de l'élément même et ayant la fonction de joints, les colliers pouvant être reliés éventuellement par des côtes (25) s'étendant selon la génératrice de la surface externe.

10^) Filtre contre le bruit selon la revendication 9^), dans lequel chaque collier annulaire comprend deux portions annulaires parallèles (26) qui délimitent entre elles une chambre à air lorsque le filtre est mise en place.

EP 0 387 473 A1

Fig.1

Fig.2

Fig.3

Fig.4

Fig.7

Fig.5

Fig.8

Fig.6

Fig.9

Office européen
des brevets

**RAPPORT DE RECHERCHE EUROPEENNE**

Numero de la demande

EP  89 83 0137

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 374 582  (HUMPERT) <br> * Page 2, lignes 25-36; figures 2,3 * | 1,2,3,5 ,9 | F 16 L   55/02 |
| A | | 7 | |
| | --- | | |
| X | US-A-3 327 628  (LOPREST) <br> * Colonne 6, lignes 4-19; figures 9,10 * | 1,2,3,4 ,6 | |
| | ----- | | |

**DOMAINES TECHNIQUES RECHERCHES (Int. Cl.5)**

F 16 L

Le présent rapport a été établi pour toutes les revendications

| Lieu de la recherche | Date d'achèvement de la recherche | Examinateur |
|---|---|---|
| LA HAYE | 23-05-1990 | HUBEAU M.G. |